Europäisches Patentamt

European Patent Office

Office européen des brevets

(19)

(11) Numéro de publication : **0 083 574**
**B1**

# (12) FASCICULE DE BREVET EUROPÉEN

(45) Date de publication du fascicule du brevet : 20.08.86

(21) Numéro de dépôt : 83400004.4

(22) Date de dépôt : 03.01.83

(51) Int. Cl.⁴ : **G 01 J    3/04**

(54) Dispositif optique pour un spectromètre d'émission.

(30) Priorité : 05.01.82 FR 8200062

(43) Date de publication de la demande :
13.07.83 Bulletin 83/28

(45) Mention de la délivrance du brevet :
20.08.86 Bulletin 86/34

(84) Etats contractants désignés :
AT BE CH DE FR GB IT LI LU NL SE

(56) Documents cités :
FR-A- 2 305 717
GB-A- 1 050 528
US-A- 3 080 788
Le dossier contient des informations techniques présentées postérieurement au dépôt de la demande et
ne figurant pas dans le présent fascicule.

(73) Titulaire : **INSTRUMENTS S.A.**
**25, avenue de l'Opéra**
**F-75001 Paris (FR)**

(72) Inventeur : **Thevenon, Alain**
**Résidence Champ Fleuri 14 rue Maurice Boyau**
**F-91220 Bretigny (FR)**

(74) Mandataire : **Phélip, Bruno et al**
**c/o Cabinet Harlé & Phélip 21, rue de la Rochefou-**
**cauld**
**F-75009 Paris (FR)**

## Description

La présente invention se rapporte à un dispositif optique à montage Paschen-Runge assurant la décomposition de la lumière polychromatique émise lors de l'excitation de l'échantillon à analyser. Ce dispositif optique est destiné à être monté dans un spectromètre d'émission à lecture directe.

Un dispositif optique à montage Paschen-Runge comporte un réseau de diffraction concave qui reçoit d'une fente d'entrée, la lumière polychromatique émise par l'excitation de l'échantillon à analyser. La fente d'entrée est placée sur le cercle de Rowland qui est tangent à la surface sphérique concave sur laquelle est formé le réseau et qui a un diamètre égal au rayon de courbure de cette surface. Les faisceaux monochromatiques donnés par le réseau convergent en des points situés sur le cercle de Rowland. Les longueurs d'ondes choisies sont sélectionnées par des fentes de sortie placées sur le cercle de Rowland. Un tel dispositif est décrit, par exemple dans le brevet FR-A-2 305 717.

Dans les montages Paschen-Runge, les fentes disposées sur le cercle de Rowland sont généralement montées individuellement sur un porte-fente rigide réglable par rapport au bâti. Cet agencement est mal adapté au réglage des fentes de sortie.

Dans un autre dispositif connu, applicable à un spectromètre et décrit dans le document GB-A-1 050 528, les fentes sont ménagées sur un ruban arqué selon la courbure du cercle de Rowland et pouvant être constitué de plusieurs parties fixées sur des portées d'appui par des agrafes. Celles-ci sont réparties sur toute la longueur de la portée d'appui et ce mode de fixation ne permet pas un réglage fin de l'ensemble des fentes, par exemple en cas de variation de température entraînant des dilatations différentes du ruban et du bâti.

La présente invention a pour objet un dispositif optique de spectromètre utilisant le montage de Paschen-Runge et dans lequel le réglage du porte-fentes peut être réalisé facilement.

Le dispositif selon l'invention est donc du type décrit dans le document FR-A-2 305 717 et est caractérisé en ce que le porte-fentes est réalisé par un ruban flexible continu susceptible de couvrir l'ensemble des longueurs d'ondes sélectionnées du spectre fourni par le réseau et accroché par ses deux extrémités à deux barrettes de fixation immobilisées sur le bâti et munies de moyens de mise en tension et de réglage de la position du ruban le long du cercle de Rowland.

Selon une caractéristique avantageuse, le ruban est constitué de deux parties raccordées l'une à l'autre par une pièce de liaison fonctionnant comme un tendeur.

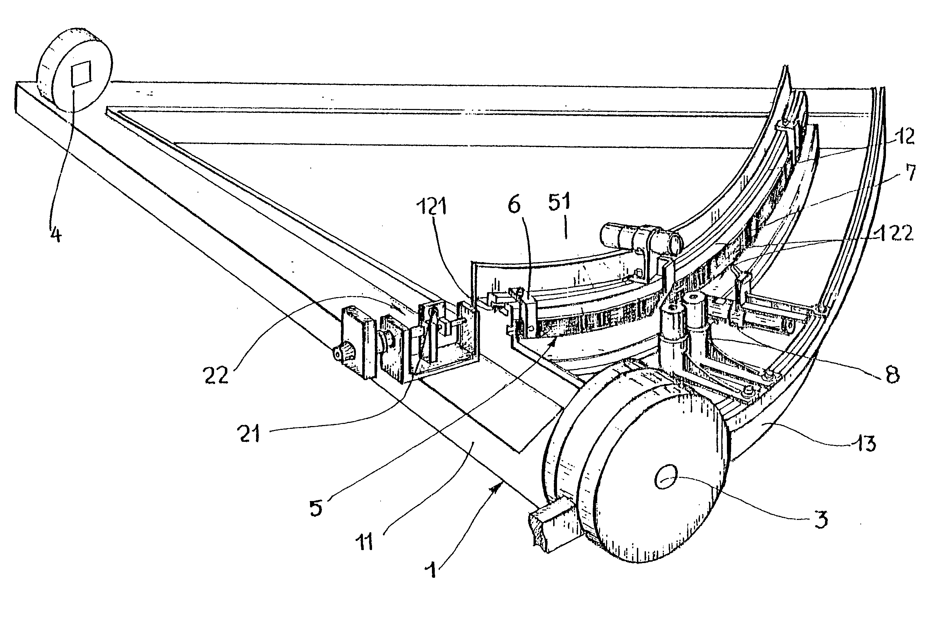

L'invention va maintenant être décrite avec plus de détails en se référant à un mode de réalisation donné à titre d'exemple et représenté par le dessin annexé.

La figure unique est une vue d'ensemble du dispositif conforme à l'invention.

En se référant à la figure le dispositif comporte un bâti métallique 1 ayant une forme générale de secteur circulaire. Ce bâti monobloc est constitué par deux branches 11 formant un V et réunies par un ou plusieurs rails 12, 13 en forme d'arcs de cercle.

Le dispositif comporte une fente d'entrée 21 qui fait partie d'un montage de réglage à vis 22 qui est porté par le bâti. La fente d'entrée reçoit, au travers de l'objectif 3, le faisceau de lumière polychromatique émise par l'échantillon excité.

Le faisceau qui traverse la fente d'entrée est reçu sur un réseau de diffraction 4 formé sur une surface sphérique concave. Ce réseau est monté dans un support qui est fixé à la pointe du V formé par le bâti. Il décompose le faisceau de lumière polychromatique en plusieurs faisceaux monochromatiques donnant des images de la fente d'entrée qui sont situées sur le cercle de Rowland passant par la fente d'entrée et tangent au réseau, le diamètre de ce cercle étant égal au rayon de courbure de la surface sphérique portant les traits du réseau. Le rail 12 du bâti forme une ouverture ou fenêtre dans laquelle passent les faisceaux monochromatiques. Ce rail forme par ailleurs des portées d'appui cylindriques 122 situées de part et d'autre de cette ouverture et qui enveloppent un cylindre passant par le cercle de Rowland.

Les fentes de sortie 51 sont ménagées dans un porte-fentes 5 couvrant l'ensemble des longueurs d'ondes sélectionnées du spectre fourni par le réseau. Ce porte-fentes est constitué par un ruban métallique flexible qui est tenu à ses extrémités de manière à être appliqué contre les portées cylindriques 122 du bâti qui servent à le guider selon le cercle de Rowland. Les extrémités du ruban porte-fentes sont accrochées à deux barrettes immobilisées par un système vis et écrou dans une rainure 121 du rail 12. Chaque barrette 6 comporte un écrou qui permet de régler la position du ruban 5 le long du cercle de Rowland et de régler la tension.

Le ruban 5 est formé de deux parties raccordées l'une à l'autre par une pièce de liaison 7 fonctionnant comme un tendeur. Le ruban 5 est réalisé, par électrodéposition, en nickel dont le coefficient de dilatation est proche de celui de la fonderie ou en un autre métal par un procédé de fabrication convenable.

Les faisceaux monochromatiques après avoir traversé les fentes de sortie 51, sont dirigés, directement ou par l'intermédiaire de miroirs, sur des détecteurs 8 constitués par des photomultiplicateurs qui mesurent les flux lumineux de ces faisceaux. Les détecteurs 8 sont montés sur les rails 12 et 13.

## Revendications

1. Dispositif optique à montage de Paschen-Runge pour un spectromètre d'émission compor-

2

tant sur un bâti (1) en forme de secteur circulaire, une fente d'entrée (21) éclairée en lumière polychromatique, un réseau de diffraction concave (4) qui reçoit le faisceau de lumière polychromatique et envoie des faisceaux monochromatiques vers une pluralité de fentes de sortie (51) placées sur le cercle de Rowland du réseau de diffraction (4) et portées par un porte-fentes (5) en forme de ruban appliqué sur deux portées d'appui (122) s'étendant de part et d'autre d'une ouverture de passage des faisceaux monochromatiques, et enveloppant un cylindre passant par le cercle de Rowland caractérisé par le fait que le porte-fentes (5) est constitué par un ruban flexible continu susceptible de couvrir l'ensemble des longueurs d'ondes sélectionnées du spectre fourni par le réseau et accroché par ses deux extrémités à deux barrettes de fixation (6), immobilisées sur le bâti (1) et munies de moyens de mise en tension et de réglage de la position du ruban (5) le long du cercle de Rowland.

2. Dispositif selon la revendication 1 caractérisé par le fait que les barrettes (6) sont immobilisées par un système vis-écrou dans une rainure (121) du bâti.

3. Dispositif selon l'une quelconque des revendications précédentes, caractérisé par le fait que le ruban (5) est constitué de deux parties raccordées l'une à l'autre par une pièce de liaison (7) fonctionnant comme un tendeur.

4. Dispositif selon l'une quelconque des revendications précédentes, caractérisé par le fait que le ruban porte-fentes (5) est réalisé en nickel.

### Claims

1. Optical Paschen-Runge assembly arrangement for an emission spectrometer, comprising, on a frame (1) in the form of a sector of a circle, an entrance slit (21) illuminated in polychromatic light, a concave diffraction grating (4) which receives the beam of polychromatic light and directs monochromatic beams towards a plurality of exit slits (51) located on the Rowland circle of the diffraction grating (4) and carried by a support (5) for the slits, which support is in the form of a tape applied to two supporting ledges (122) extending on both sides of an aperture for the passage of the monochromatic beams, and enveloping a cylinder passing through the Rowland circle, characterized in that the support (5) for the slits is constituted by a continuous flexible tape capable of covering all the selected wavelengths of the spectrum provided by the grating and engaged by its two ends on two fixing bars (6), which are immobilized on the frame (1) and provided with means for tensioning and regulating the position of the tape (5) along the Rowland circle.

2. Arrangement according to Claim 1, characterized in that the bars (6) are immobilized by a nut and bolt system in a groove (121) of the frame.

3. Arrangement according to either one of the preceding claims, characterized in that the tape (5) is constituted by two parts connected to one another by a linking component (7) operating as a tensioning device.

4. Arrangement according to any one of the preceding claims, characterized in that the support (5) for the slits, which is in the form of a tape, is constructed of nickel.

### Patentansprüche

1. Optische Anordnung für ein Emissionsspektrometer nach der Bauart Paschen-Runge mit einem Kreissektorförmigen Rahmen (1), einem mit polychromatischem Licht beleuchteten Eintrittsspalt (21), einem konkaven Beugungsgitter (4), welches ein polychromatisches Lichtbündel empfängt und monochromatische Bündel zu mehreren Austrittsspalten (51) aussendet, die auf dem Rowland-Kreis des Beugungsgitters (4) angeordnet sind und von einem Spaltträger (5) in Form eines an zwei Stützen (122) angebrachten Bandes getragen werden, welche sich auf beiden Seiten einer Durchgangsöffnung der monochromen Strahlenbündel erstrecken und einen durch den Rowland-Kreis hindurchtretenden Zylinder einschliessen, dadurch gekennzeichnet, dass der Spaltträger (5) durch ein fortlaufendes flexibles Band gebildet ist, welches zum Abdecken der Gesamtheit der aus dem Spektrum ausgewählten Wellenlängen geeignet ist, das durch das Gitter gebildet wird, und welches mit seinen beiden Enden an zwei Befestigungsstäben (6) angebracht ist, die an dem Rahmen (1) festgestellt sind und mit Mitteln zum Spannen und Positionieren des Bandes (5) entlang dem Rowland-Kreis versehen sind.

2. Anordnung nach Anspruch 1, dadurch gekennzeichnet, dass die Stäbe (6) durch eine Schrauben-Mutteranordnung in einer Nut (121) des Rahmens festgelegt sind.

3. Anordnung nach einem der vorangehenden Ansprüche, dadurch gekennzeichnet, dass das Band (5) aus zwei Abschnitten besteht, welche über ein als Spanner ausgebildetes Verbindungsstück (7) miteinander verbunden sind.

4. Anordnung nach einem der vorangehenden Ansprüche, dadurch gekennzeichnet, dass das Spaltträger-Band (5) aus Nickel besteht.

0 083 574